# EUROPEAN PATENT APPLICATION

(11) **EP 4 580 236 A1**
(43) Date of publication of application: **02.07.2025**
(21) Application number: 23884457.5
(22) Date of filing: 08.09.2023
(51) Int. Cl.: H04W 16/18

(54) **DATA TRANSMISSION METHOD, COMMUNICATION APPARATUS, AND SYSTEM**

(30) Priority: 02.11.2022 CN 202211364877
(71) Applicant: Huawei Technologies Co., Ltd., Shenzhen, Guangdong 518129 (CN)
(72) Inventor: CHEN, Yongjue, Shenzhen, Guangdong 518129 (CN); LIU, Yong, Shenzhen, Guangdong 518129 (CN); LIN, Yongbiao, Shenzhen, Guangdong 518129 (CN); LI, Shaohua, Shenzhen, Guangdong 518129 (CN); CHEN, Dongming, Shenzhen, Guangdong 518129 (CN)
(74) Representative: Körber, Martin Hans
(86) International application number: PCT/CN2023/117678
(87) International publication number: WO 2024/093524

(57) **Abstract**

This application provides a data transmission method and a communication apparatus and system. The method can be applied to a communication architecture scenario including a core network element and at least two network devices. The method includes: A first network device sends first data to the core network element, and the core network element forwards the first data to a second network device. In this way, this application supports data transmission between network devices in a wider range through data forwarding of the core network element.

## Description

This application claims priority to Chinese Patent Application No. 202211364877.X, filed with the China National Intellectual Property Administration on November 2, 2022 and entitled "DATA TRANSMISSION METHOD AND COMMUNICATION APPARATUS AND SYSTEM", which is incorporated herein by reference in its entirety.

### TECHNICAL FIELD

This application relates to the field of communication technologies, and more specifically, to a data transmission method and a communication apparatus and system.

### BACKGROUND

To better serve a terminal user, a technical solution of collaboration between network devices is provided currently. For example, when a terminal user is in a cross coverage area between a first network device and a second network device, a coordination function between the first network device and the second network device may be used to improve received signal strength of the terminal user, and reduce signal interference. Implementation of coordination between the first network device and the second network device depends on data transmission between the first network device and the second network device.

Currently, a manner of the data transmission between the first network device and the second network device is applicable only to data transmission between network devices in a partial range, but is not applicable to data transmission between network devices in a wider range.

### SUMMARY

This application provides a data transmission method and a communication apparatus and system, to implement data transmission between network devices in a wider range.

According to a first aspect, a data transmission method is provided. The method is applied to a side of a first network device, and the method includes: determining first data, where a target receiving object of the first data is a second network device; and sending the first data to a core network element, where the core network element is configured to forward the first data to the second network device.

It should be understood that the core network element has a capability of communicating with the first network device and the second network device, and the core network element can forward, to the second network device, the first data sent by a first network device to the core network element.

This application supports the core network element in forwarding data between network devices, so that data transmission between network devices based on non-private information is implemented, and data transmission between network devices in a wider range can be implemented. The data transmission between network devices is implemented via the core network element, so that an interworking mechanism for data transmission between network devices of different vendors can be formed.

In addition, because bandwidth overheads of data transmission performed by different vendors based on private information of the different vendors are different, differentiated requirements are imposed on bandwidth of a bearer network matching a network device. This increases complexity of bearer network construction. In this application, the complexity of the bearer network construction can be reduced by using a technical solution in which the core network element is used to forward data.

In a possible implementation, the method further includes: receiving second data from the core network element, where the second data is sent by the second network device to the core network element.

Specifically, a source sending object of the second data is the second network device, and a target receiving object of the second data is the first network device. The second network device sends the second data to the first network device via the core network element, so that data transmission between the first network device and the second network device can be implemented.

In a possible implementation, the first data indicates at least one of first configuration information of a first network device and second configuration information of the second network device.

It should be understood that when the first data indicates the first configuration information of the first network device, the second network device can determine a configuration parameter of the first network device based on the first configuration information, to better implement a coordination function between the second network device and the first network device. When the first data indicates the second configuration information of the second network device, the second network device can determine, based on the second configuration information, a configuration parameter configured by the first network device for the second network device, to better implement the coordination function between the second network device and the first network device.

In conclusion, this application supports better implementation of a coordination function between network devices by indicating the configuration information of the first network device and/or the second network device.

In a possible implementation, the second data indicates at least one of third configuration information of the first network device and fourth configuration information of the second network device.

In a possible implementation, the method further includes: The first network device sends third data to the second network device, where the third data is backup data of the first data.

Specifically, this application supports implementation of a redundancy backup function between network devices, and can improve reliability of a wireless communication system, to further ensure service reliability. For example, when a device fault occurs on the first network device, the second network device may replace, based on the third data sent by the first network device, the first network device to continue providing a communication service.

In a possible implementation, the third data is sent by the first network device through a directly connected interface between the first network device and the second network device.

In this way, this implementation may be compatible with an existing manner of data transmission between network devices.

In a possible implementation, the method further includes: The first network device receives fourth data from the second network device, where the fourth data is backup data of the second data.

Specifically, this application supports implementation of a redundancy backup function between network devices, and can improve reliability of a wireless communication system, to further ensure service reliability. For example, when a device fault occurs on the second network device, the first network device may replace, based on the fourth data sent by the second network device, the second network device to continue providing a communication service.

In a possible implementation, the fourth data is received by the first network device through the directly connected interface between the first network device and the second network device.

In this way, this implementation may be compatible with an existing manner of data transmission between network devices.

According to a second aspect, a data transmission method is provided. The method is applied to a side of a second network device, and the method includes: receiving first data from a core network element, where a source sending device of the first data is a first network device, and the core network element is configured to forward the first data to a second network device.

In a possible implementation, the first data indicates at least one of first configuration information of the first network device and second configuration information of the second network device.

In a possible implementation, the method further includes: sending second data to the core network element, where a target receiving object of the second data is the first network device.

In a possible implementation, the second data indicates at least one of third configuration information of the first network device and fourth configuration information of the second network device.

In a possible implementation, the method further includes: receiving third data from the first network device, where the third data is backup data of the first data.

In a possible implementation, the third data is received by the second network device through a directly connected interface between the first network device and the second network device.

In a possible implementation, the method further includes: sending fourth data to the first network device, where the fourth data is backup data of the second data.

In a possible implementation, the fourth data is sent by the second network device through the directly connected interface between the first network device and the second network device.

According to a third aspect, a data transmission method is provided. The method is applied to a side of a core network element, and the method includes: receiving first data from a first network device, where a target receiving object of the first data is a second network device; and sending the first data to the second network device.

In a possible implementation, the method further includes: receiving second data from the second network device, where a target receiving object of the second data is the first network device; and sending the second data to the first network device.

In a possible implementation, the first data indicates at least one of first configuration information of the first network device and second configuration information of the second network device.

In a possible implementation, the second data indicates at least one of third configuration information of the first network device and fourth configuration information of the second network device.

According to a fourth aspect, a communication apparatus is provided, and is configured to perform the method in the first aspect. In a design, the apparatus may include a module/unit that is in one-to-one correspondence with the method/operation/step/action described in the first aspect. The module/unit may be implemented by a hardware circuit, software, or a combination of the hardware circuit and software. In another design, the apparatus includes: a processing unit, configured to determine first data, where a target receiving object of the first data is a second network device; and a transceiver unit, configured to send the first data to a core network element, where the core network element is configured to forward the first data to the second network device.

In a possible implementation, the transceiver unit is further configured to receive second data from the core network element, where the second data is sent by the second network device to the core network element.

In a possible implementation, the first data indicates at least one of first configuration information of the communication apparatus and second configuration information of the second network device.

In a possible implementation, the second data indicates at least one of third configuration information of the communication apparatus and fourth configuration information of the second network device.

In a possible implementation, the transceiver unit is further configured to send third data to the second network device, where the third data is backup data of the first data.

In a possible implementation, the third data is sent by the communication apparatus through a directly connected interface between the communication apparatus and the second network device.

In a possible implementation, the transceiver unit is further configured to receive fourth data from the second network device, where the fourth data is backup data of the second data.

In a possible implementation, the fourth data is received by the communication apparatus through the directly connected interface between the communication apparatus and the second network device.

According to a fifth aspect, a communication apparatus is provided, and is configured to perform the method in the second aspect. In a design, the apparatus may include a module/unit that is in one-to-one correspondence with the method/operation/step/action described in the second aspect. The module/unit may be implemented by a hardware circuit, software, or a combination of the hardware circuit and software. In another design, the apparatus includes a transceiver unit, configured to receive first data from a core network element, where a target receiving object of the first data is a second network device, and the core network element is configured to forward the first data to the communication apparatus.

In a possible implementation, the first data indicates at least one of first configuration information of a first network device and second configuration information of the communication apparatus.

In a possible implementation, the transceiver unit is further configured to send second data to the core network element, where a target receiving object of the second data is the first network device.

In a possible implementation, the second data indicates at least one of third configuration information of the first network device and fourth configuration information of the communication apparatus.

In a possible implementation, the transceiver unit is further configured to receive third data from the first network device, where the third data is backup data of the first data.

In a possible implementation, the third data is received by the second network device through a directly connected interface between the first network device and the communication apparatus.

In a possible implementation, the transceiver unit is further configured to send fourth data to the first network device, where the fourth data is backup data of the second data.

In a possible implementation, the fourth data is sent by the communication apparatus through the directly connected interface between the first network device and the communication apparatus.

According to a sixth aspect, a communication apparatus is provided, and is configured to perform the method in the third aspect. In a design, the apparatus may include a module/unit that is in one-to-one correspondence with the method/operation/step/action described in the second aspect. The module/unit may be implemented by a hardware circuit, software, or a combination of the hardware circuit and software. In another design, the apparatus includes a transceiver unit, configured to receive first data from a first network device, where a target receiving object of the first data is a second network device. The transceiver unit is further configured to send the first data to the second network device.

In a possible implementation, the transceiver unit is further configured to: receive second data from the second network device, where a target receiving object of the second data is the first network device; and send the second data to the first network device.

In a possible implementation, the first data indicates at least one of first configuration information of the first network device and second configuration information of the second network device.

In a possible implementation, the second data indicates at least one of third configuration information of the first network device and fourth configuration information of the second network device.

According to a seventh aspect, a communication system is provided, and includes a first network device, a second network device, and a core network element. The first network device is configured to send first data to the core network element, and the core network element is configured to send the first data to the second network device.

In a possible implementation, the second network device is configured to send second data to the core network element, and the core network element is further configured to send the second data to the first network device.

In a possible implementation, the first data indicates at least one of first configuration information of the first network device and second configuration information of the second network device.

In a possible implementation, the second data indicates at least one of third configuration information of the first network device and fourth configuration information of the second network device.

In a possible implementation, the first network device is further configured to send third data to the second network device, where the third data is backup data of the first data.

In a possible implementation, the third data is sent by the first network device through a directly connected interface between the first network device and the second network device.

In a possible implementation, the first network device is further configured to receive fourth data from the second network device, where the fourth data is backup data of the second data.

In a possible implementation, the fourth data is received by the first network device through the directly connected interface between the first network device and the second network device.

According to an eighth aspect, a communication apparatus is provided, and includes a processor. The processor is configured to enable, by executing a computer program or instructions or through a logic circuit, the communication apparatus to perform the method in any one of the first aspect and the possible implementations of the first aspect, or the communication apparatus to perform the method in any one of the second aspect and the possible implementations of the second aspect, or the communication apparatus to perform the method in any one of the third aspect and the possible implementations of the third aspect.

In a possible implementation, the communication apparatus further includes a memory, and the memory is configured to store the computer program or the instructions.

In a possible implementation, the communication apparatus further includes a communication interface, and the communication interface is configured to input and/or output a signal.

According to a ninth aspect, a communication apparatus is provided, and includes a logic circuit and an input/output interface. The input/output interface is configured to input and/or output a signal, and the logic circuit is configured to perform the method in any one of the first aspect and the possible implementations of the first aspect; or the logic circuit is configured to perform the method in any one of the second aspect and the possible implementations of the second aspect; or the logic circuit is configured to perform the method in any one of the third aspect and the possible implementations of the third aspect.

According to a tenth aspect, a computer-readable storage medium is provided, and includes a computer program or instructions. When the computer program or the instructions are run on a computer, the method in any one of the first aspect and the possible implementations of the first aspect is performed; or the method in any one of the second aspect and the possible implementations of the second aspect is performed; or the method in any one of the third aspect and the possible implementations of the third aspect is performed.

According to an eleventh aspect, a computer program product is provided, and includes instructions. When the instructions are run on a computer, the method in any one of the first aspect and the possible implementations of the first aspect is performed; or the method in any one of the second aspect and the possible implementations of the second aspect is performed; or the method in any one of the third aspect and the possible implementations of the third aspect is performed.

According to a twelfth aspect, a computer program is provided. When the computer program is run on a computer, the method in any one of the first aspect and the possible implementations of the first aspect is performed; or the method in any one of the second aspect and the possible implementations of the second aspect is performed; or the method in any one of the third aspect and the possible implementations of the third aspect is performed.

### BRIEF DESCRIPTION OF DRAWINGS

FIG. 1 is a diagram of a communication system 100 to which an embodiment of this application is applicable;
FIG. 2 is a schematic interaction flowchart of a data transmission method 200 according to an embodiment of this application;
FIG. 3 is a diagram of data transmission between network devices according to an embodiment of this application;
FIG. 4 is a block diagram of a communication apparatus 400 according to an embodiment of this application;
FIG. 5 is a block diagram of a communication apparatus 500 according to an embodiment of this application;
FIG. 6 is a block diagram of a communication apparatus 600 according to an embodiment of this application; and
FIG. 7 is a block diagram of a communication apparatus 700 according to an embodiment of this application.

### DESCRIPTION OF EMBODIMENTS

The following describes technical solutions of this application with reference to the accompanying drawings.

The technical solutions in embodiments of this application can be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) system or a new radio (new radio, NR) system, an evolved system after 5G like a 6th generation (6th generation, 6G) system, or non-terrestrial network (non-terrestrial network, NTN) systems such as an inter-satellite communication system and a satellite communication system. The satellite communication system includes a satellite base station and a terminal device. The satellite base station provides a communication service for the terminal device. The satellite base station may also communicate with a terrestrial base station. A satellite may be used as a base station, or may be used as a terminal device. The satellite may be a non-terrestrial base station, a non-terrestrial device, or the like, for example, an uncrewed aerial vehicle, a hot air balloon, a low earth orbit satellite, a medium earth orbit satellite, or a high earth orbit satellite.

The technical solutions in embodiments of this application are applicable to both a homogeneous network scenario and a heterogeneous network scenario. In addition, a transmission point is not limited. Coordinated multipoint transmission may be performed between macro base stations, between micro base stations, and between a macro base station and a micro base station. The technical solutions in embodiments of this application are applicable to the FDD/TDD system. The technical solutions in embodiments of this application are applicable to not only a low-frequency scenario (sub 6G), but also a high-frequency scenario (above 6 GHz), terahertz, optical communication, and the like. The technical solutions in embodiments of this application are applicable to not only communication between a network device and a terminal, but also communication between network devices, communication between terminals, communication in an internet of vehicles, communication in an internet of things, communication in an industrial internet, and the like.

The technical solutions in embodiments of this application may also be applied to a scenario in which a terminal is connected to a single base station. The base station connected to the terminal and a core network (core network, CN) connected to the base station are of a same standard. For example, if the CN is a 5G core, the base station is correspondingly a 5G base station, and the 5G base station is directly connected to the 5G core. Alternatively, if the CN is a 6G core, the base station is a 6G base station, and the 6G base station is directly connected to the 6G core. The technical solutions in embodiments of this application are also applicable to a dual connectivity (dual connectivity, DC) scenario in which a terminal is connected to at least two base stations.

The technical solutions in embodiments of this application may also use a macro-micro scenario including different forms of base stations in a communication network. For example, the base station may be a satellite, an air balloon station, or an uncrewed aerial vehicle station. The technical solutions in embodiments of this application are also applicable to a scenario in which both a wide-coverage base station and a small-coverage base station exist.

The technical solutions in embodiments of this application can be applied to a scenario in which a service has a requirement on high reliability, for example, a port, industrial manufacturing, transportation, and a coal mine scenario.

It may be further understood that, the technical solutions in embodiments of this application may be further applied to a wireless communication system after 5.5G and 6G. Application scenarios include but are not limited to a terrestrial cellular communication scenario, an NTN scenario, a satellite communication scenario, a high altitude platform station (high altitude platform station, HAPS) communication scenario, a vehicle-to-everything (vehicle-to-everything, V2X) scenario, an integrated access and backhaul (integrated access and backhaul, IAB) scenario, a reconfigurable intelligent surface (reconfigurable intelligent surface, RIS) communication scenario, and the like.

The terminal in embodiments of this application may be a device having a wireless transceiver function, and may be specifically user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, personal digital processing (personal digital assistant, PDA), customer-premises equipment (customer-premises equipment, CPE), a smart point of sale (point of sale, POS) machine, a handheld device having a wireless communication function, a computing device or another processing device connected to a wireless modem, a vehicle-mounted device, a communication device carried on a high altitude aircraft, a wearable device, an uncrewed aerial vehicle, a robot, a terminal in device-to-device (device-to-device, D2D) communication, a terminal in V2X, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in an evolved communication network after 5G, or the like. This is not limited in embodiments of this application.

In embodiments of this application, an apparatus configured to implement a function of the terminal device may be the terminal device, or may be an apparatus that can support the terminal device in implementing the function, for example, a chip system. The apparatus may be installed in a terminal device or used in a manner of matching a terminal device. In embodiments of this application, the chip system may include a chip, or may include a chip and another discrete component.

The network device in embodiments of this application is a device having a wireless transceiver function, and is configured to communicate with a terminal device. An access network device may be a node in a radio access network (radio access network, RAN), and may be referred to as a base station, or may be referred to as a RAN node. The access network device may be an evolved NodeB (evolved NodeB, eNB or eNodeB) in LTE, a base station in a 5G network like a gNodeB (gNB), a base station in an evolved public land mobile network (public land mobile network, PLMN) after 5G, a broadband network gateway (broadband network gateway, BNG), an aggregation switch, a 3rd generation partnership project (3rd generation partnership project, 3GPP) access device, or the like. For example, the RAN may be configured as a RAN defined in a 3GPP protocol, an open radio access network (open radio access network, O-RAN), a cloud access network (cloud radio access network, C-RAN), or the like.

The network device in embodiments of this application may further include base stations in various forms, for example, a macro base station, a micro base station (also referred to as a small cell), a relay station, a transmission point (transmitting and receiving point, TRP), a transmitting point (transmitting point, TP), a mobile switching center, and a device that functions as a base station in device-to-device (device-to-device, D2D), vehicle-to-everything (vehicle-to-everything, V2X), and machine-to-machine (machine, M2M) communication, and a network device in the NTN communication system. This is not specifically limited in embodiments of this application.

The network device in embodiments of this application may further include network elements or modules that implement some functions of the base station, for example, include one or more of the following: a central unit (central unit, CU), a distributed unit (distributed unit, DU), or a radio unit (radio unit, RU). Optionally, the CU may be further separated into a CU-control plane (control plane, CP) and a CU-user plane (user plane, UP). Functions of the CU and the DU may be implemented by different network elements, or may be both implemented by a baseband unit (baseband unit, BBU) of the base station. A function of the RU may be implemented by a radio frequency device of the base station. For example, the radio frequency device of the base station may be a remote radio unit (remote radio unit, RRU), a pico remote radio unit (pico remote radio unit, pRRU), an active antenna unit (active antenna unit, AAU), or another unit, module, or device having a radio frequency processing function. A communication interface protocol between the BBU and the radio frequency device may be a common public radio interface (common public radio interface, CPRI) interface protocol, an enhanced common public radio interface (enhanced common public radio interface, eCPRI) interface protocol, a fronthaul interface protocol between a DU and an RU in an O-RAN system, or the like. This is not limited.

In embodiments of this application, an apparatus configured to implement a function of the network device may be the network device, or may be an apparatus that can support the network device in implementing the function, for example, a chip system. The apparatus may be installed in the network device or used in cooperation with the network device. In embodiments of this application, the chip system may include a chip, or may include a chip and another discrete component.

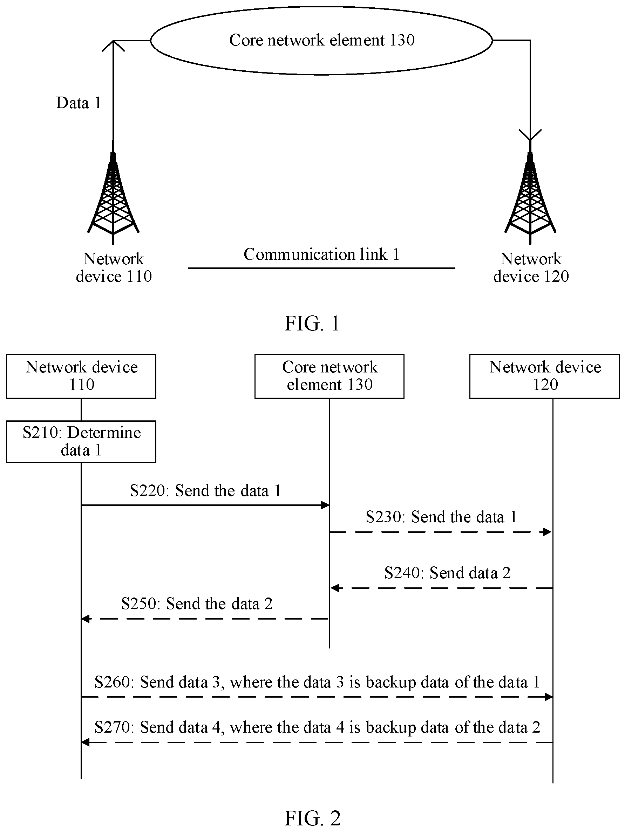

FIG. 1 is a diagram of a communication system 100 to which an embodiment of this application is applicable. As shown in FIG. 1, the communication system 100 includes a network device 110, a network device 120, and a core network element 130. It should be understood that a quantity of network devices included in the communication system 100 is not limited in this embodiment of this application. FIG. 1 is merely an example for understanding, and cannot limit the protection scope claimed in this application. The network device 110 and the network device 120 may be any network device listed above.

In FIG. 1, there may be a communication link 1 (or a directly connected interface) for direct communication between the network device 110 and the network device 120, or data transmission between the network device 110 and the network device 120 may be implemented via the core network element 130. For example, the network device 110 sends data 1 to the core network element 130, and the core network element 130 sends the data 1 to the network device 120. Correspondingly, the network device 120 sends data 2 (not shown in FIG. 1) to the core network element 130, and the core network element 130 sends the data 2 (not shown in FIG. 1) to the network device 110.

It should be understood that a communication interface between the network device 110 or the network device 120 and the core network element 130 may be an Ng interface in a 5G communication system, or may be another type of interface, for example, an S1 interface in an LTE communication system. The communication interface can implement communication between the network device 110 or the network device 120 and the core network element 130. This is not limited in this application. In addition, a communication interface between the network device 110 and the network device 120 is a directly connected interface, and the directly connected interface can implement the direct communication between the network device 110 and the network device 120. The directly connected interface may have different names in different communication systems. For example, the directly connected interface is an X2 interface in the LTE communication system, and is an Xn interface in the 5G communication system.

In FIG. 1, the core network element 130 may correspond to different devices in different communication systems. For example, the core network element 130 may be a mobility management entity (mobility management entity, MME) and/or a serving gateway (serving gateway, S-GW) in a core network of the LTE communication system, namely, an evolved packet core (evolved packet core, EPC), or may be one or more of an access and mobility management function (access and mobility management function, AMF) network element, a session management function (session management function, SMF) network element, a user plane function (user plane function, UPF) network element, or the like in a 5G core (5G core, 5GC) network.

It can be learned from the foregoing descriptions that implementation of a coordination function between the network device 110 and the network device 120 needs to depend on the data transmission between the network device 110 and the network device 120. The data transmission between the network device 110 and the network device 120 may be implemented based on private information. The private information may be of an information type set by different vendors. In other words, private information of different vendors is (usually) different. For example, private information that is for the data transmission between the network device 110 and the network device 120 and that is set by a vendor 1 is information 1, and private information that is for the data transmission between the network device 110 and the network device 120 and that is set by a vendor 2 is information 2, where the information 1 is different from the information 2. In this way, data transmission between network devices is applicable only to data transmission between network devices in a partial range (that is, data transmission between network devices belonging to a same vendor), and cannot be applicable to data transmission between network devices in a wider range (that is, data transmission between a plurality of network devices belonging to different vendors).

In view of this, this application provides a data transmission method and a communication apparatus and system, to implement the data transmission between network devices in a wider range.

The following describes the data transmission method in embodiments of this application with reference to the accompanying drawings.

FIG. 2 is a schematic interaction flowchart of a data transmission method 200 according to an embodiment of this application. A method procedure in FIG. 2 may be performed by a network device 110, a network device 120, and a core network element 130, or may be performed by a module (for example, a CU, a CU-CP, or a BBU in a network device) and/or a component (for example, a chip or an integrated circuit) that have/has a corresponding function and that are/is installed in the network device 110, the network device 120, and the core network element 130. This is not limited in this application. The following uses the network device 110, the network device 120, and the core network element 130 as an example for description. As shown in FIG. 2, the method 200 includes the following steps.
S210: The network device 110 determines data 1.

Specifically, a target receiving object of the data 1 determined by the network device 110 is the network device 120.

In a possible implementation, the data 1 indicates at least one of configuration information #1 of the network device 110 and configuration information #2 of the network device 120.

It should be understood that when the data 1 indicates the configuration information #1 of the network device 110, the network device 120 determines a configuration parameter of the network device 110 based on the configuration information #1 indicated by the data 1. In an example, the configuration parameter of the network device 110 includes at least one of the following: heartbeat data (which may include periodic heartbeat data and/or aperiodic heartbeat data) exchanged between the network device 110 and the network device 120, a basis for determining reliability switching between network devices, and a control instruction of the network device 110, for example, enabling and disabling, power increase and decrease, and beam adjustment for beamforming. Correspondingly, after determining the configuration parameter of the network device 110, the network device 120 can better implement a coordination function between the network device 120 and the network device 110.

For example, when the configuration parameter indicated by the data 1 includes the heartbeat data, the heartbeat data may be used to ensure that when a device fault occurs on one of the two network devices, the other network device can perform network device switching quickly, accurately, and timely. For another example, when the configuration parameter indicated by the data 1 includes the control instruction of the network device, the configuration parameter may be used to implement joint scheduling between the two network devices, to control power, beam, and air interface resource scheduling of the two network devices, and further improve network signal quality in an overlapping area of the two network devices, a terminal throughput rate in the corresponding area, and the like.

Specifically, when the data 1 indicates the configuration information #1 of the network device 110, the network device 120 obtains the configuration parameter of the network device 110, so that the network device 120 may clearly learn of status information (including a link status, a power status, beamforming, and the like) of the network device 110, and the coordination function between the network device 120 and the network device 110 may be more accurately implemented.

In addition, when the data 1 indicates the configuration information #2 of the network device 120, the network device 120 can determine, based on the configuration information #2 indicated by the data 1, a configuration parameter recommended or configured by the network device 110 for the network device 120. The configuration parameter recommended or configured by the network device 110 for the network device 120 may include at least one of the following: heartbeat data exchanged between the network device 110 and the network device 120, determining of reliability switching between network devices, and a control instruction of the network device 120, for example, enabling and disabling, power increase and decrease, and beam adjustment for beamforming. Correspondingly, after determining the configuration parameter configured by the network device 110 for the network device 120, the network device 120 can better implement the coordination function between the network device 120 and the network device 110. For a specific description, refer to the foregoing descriptions. Details are not described herein again.

Specifically, when the data 1 indicates the configuration information #2 of the network device 120, the network device 120 may adjust the configuration parameter of the network device 120 based on an indication of the network device 110 (for example, adjust a link status, a power status, beamforming, and the like of the network device 120). In this way, the network device 120 can more accurately implement the coordination function between the network device 110 and the network device 120.

Optionally, the configuration information #1 may alternatively include the configuration information #2. Specifically, in addition to indicating the configuration parameter of the network device 110 to the network device 120, the network device 110 may further indicate, to the network device 120, the configuration parameter configured or recommended by the network device 110 for the network device 120. In this way, the coordination function between the network device 110 and the network device 120 can be better implemented. For example, when the network device 110 and the network device 120 provide a communication service for one terminal device simultaneously, the network device 110 and the network device 120 may coordinate a power status of each other (by using a manner of the foregoing configuration information #1 or the configuration information #2), to achieve an optimal communication service effect, and further avoid a waste of power or power consumption.

In conclusion, by using at least one of the configuration information #1 and the configuration information #2 indicated by the data 1, this application supports better implementation of the coordination function between the network device 110 and the network device 120. In addition, this application also supports implementation of a redundancy backup function between the network device 110 and the network device 120 that back up each other (described below).

It should be understood that the implementation of the coordination function or the backup function between the network device 110 and the network device 120 depends on the data transmission between the network device 110 and the network device 120.

In an example, the data 1 includes user data 1, and the user data 1 indicates communication service data between the network device 110 and a terminal device served by the network device 110.

In a possible implementation, the data 1 meets a periodicity characteristic. The periodicity characteristic indicates that the network device 110 periodically sends the data 1 to the core network element 130.

In a possible implementation, the data 1 meets an aperiodicity characteristic. The aperiodicity characteristic indicates that the network device 110 aperiodically sends the data 1 to the core network element 130.

S220: The network device 110 sends the data 1 to the core network element 130.

Correspondingly, the core network element 130 receives the data 1 from the network device 110.

It should be understood that a source sending object of the data 1 is the network device 110, and the target receiving object of the data 1 is the network device 120. The data 1 arrives at the network device 120 via the core network element 130.

In this application, when forwarding the data of the network device, the core network element may transparently forward the data, or may forward the data after processing (for example, forward a packet obtained by adding a packet header to the data). This is not limited.

Specifically, data transmission between the network device 110 and the core network element 130 may be implemented based on a 3rd generation partnership project (3rd generation partnership project, 3GPP) 38.413 protocol. The data 1 may also be transmitted by using an information format specified in the 3GPP protocol. For example, the data 1 uses an information format of uplink radio access network configuration transfer (uplink radio access network configuration transfer, UPLINK RAN CONFIGURATION TRANSFER) in the 3GPP protocol. This is not limited in this application.

It should be understood that the data 1 sent by the network device 110 to the core network element 130 may be included in the UPLINK RAN CONFIGURATION TRANSFER information, or may be transmitted by using other information in a same format as the UPLINK RAN CONFIGURATION TRANSFER information. This is not limited in this application.

In a possible implementation, for a format of the data 1 sent by the network device 110 to the core network element 130, refer to section 8.8.1 in the 3GPP 38.413 protocol. Details are not described in this application.

Optionally, the data 1 sent by the network device 110 to the core network element 130 may correspond to the UPLINK RAN CONFIGURATION TRANSFER information.

It should be understood that for a specific definition of the data 1 sent by the network device 110 to the core network element, refer to section 9.2.7.1 in the 38.413 protocol. Details are not described herein.

According to the foregoing technical solution, this application supports the core network element 130 in forwarding, to the network device 120, the data sent by the network device 110. In this way, the data transmission between the network device 110 and the network device 120 can be implemented.

Specifically, this application supports the core network element 130 in forwarding data between the network device 110 and the network device 120, so that data transmission between the network device 110 and the network device 120 based on non-private information can be implemented, and data transmission between network devices in a wider range can be implemented. The data transmission between network devices is implemented via the core network element, so that an interworking mechanism for data transmission between network devices of different vendors can be formed.

In addition, because bandwidth overheads of different vendors based on private information set by the different vendors are different, differentiated requirements are imposed on bandwidth of a bearer network matching a network device. This increases complexity of bearer network construction. The complexity of the bearer network construction can be reduced by using a technical solution in which the core network element is used to forward data.

In a possible implementation, the method 200 may further include the following steps.

S230: The core network element 130 sends the data 1 to the network device 120.

Correspondingly, the network device 120 receives the data 1 from the core network element 130.

Specifically, data transmission between the network device 120 and the core network element 130 is implemented based on section 8.8.2 in the 3GPP 38.413 protocol. The data 1 may also be transmitted by using an information format specified in the 3GPP protocol. For example, the data 1 uses an information format of downlink radio access network configuration transfer (downlink radio access network configuration transfer, DOWNLINK RAN CONFIGURATION TRANSFER) in the 3GPP protocol. This is not limited in this application.

It should be understood that the data 1 sent by the core network element 130 to the network device 120 may be included in the DOWNLINK RAN CONFIGURATION TRANSFER information, or may be transmitted by using other information in a same format as the DOWNLINK RAN CONFIGURATION TRANSFER information. This is not limited in this application.

In a possible implementation, for a format of the data 1 sent by the core network element 130 to the network device 120, refer to section 9.2.7.2 in the 3GPP 38.413 protocol. Details are not described in this application.

Optionally, the data 1 sent by the core network element 130 to the network device 120 may correspond to the DOWNLINK RAN CONFIGURATION TRANSFER information.

It should be understood that for a specific definition of the data 1 sent by the core network element 130 to the network device 120, refer to section 9.2.7.2 in the 38.413 protocol. Details are not described herein.

In this way, in this application, the network device 120 can obtain, via the core network element 130, the data sent by the network device 110, and better implement the coordination function between the network device 110 and the network device 120 based on the data sent by the network device 110.

In a possible implementation, the method 200 may further include the following steps.

S240: The network device 120 sends data 2 to the core network element 130.

Correspondingly, the core network element 130 receives the data 2 from the network device 120. For a description of the data 2, refer to the data 1. Details are not described herein again.

S250: The core network element 130 sends the data 2 to the network device 110.

Correspondingly, the network device 110 receives the data 2 from the core network element 130.

For descriptions of S230 and S240, refer to the descriptions of S210 and S220 respectively. Details are not described herein again.

It should be understood that a source sending object of the data 2 is the network device 120, and a target receiving object of the data 2 is the network device 110. The data 2 arrives at the network device 110 via the core network element 130.

The core network element 130 forwards the data sent by the network device 120 to the network device 110, so that data transmission between the network device 110 and the network device 120 is implemented based on the non-private information. In this way, in this application, the network device 110 can obtain, via the core network element 130, the data sent by the network device 120, to implement the coordination function between the network device 110 and the network device 120.

It should be understood that data transmission between the network device 110, the network device 120, and the core network element 130 complies with the 3GPP protocol, that is, complies with a public protocol. In this way, data transmission between network devices is not limited to a proprietary protocol, an application scope of the data transmission between network devices can be expanded, and a collaboration function between network devices in a wider range can be implemented.

In a possible implementation, the method 200 further includes the following step.

S260: The network device 110 sends data 3 to the network device 120.

Correspondingly, the network device 120 receives the data 3 from the network device 110.

Specifically, the data 3 sent by the network device 110 to the network device 120 through a directly connected interface between the network device 110 and the network device 120 is backup data of the data 1. In this way, when a device fault occurs on the network device 110, the network device 120 may replace, based on the data 3 sent by the network device 110, the network device 110 to provide a communication service.

It should be understood that a specific manner of sending the data 3 by the network device 110 to the network device 120 may be using private information, or may be forwarding by the foregoing core network element (where a new core network element may be configured, or the existing core network element 130 may be used, which is not limited in this application), or using an existing standard interface with a limited application scope, or using a future standard interface. This is not limited in this application.

Specifically, this application supports implementation of a redundancy backup function between network devices, and can improve reliability of a wireless communication system, to further ensure service reliability.

In a possible implementation, the method 200 further includes the following step.

S270: The network device 120 sends data 4 to the network device 110.

Correspondingly, the network device 110 receives the data 4 from the network device 120.

Specifically, the data 4 directly sent by the network device 120 to the network device 110 is backup data of the data 2. In this way, when a device fault occurs on the network device 120, the network device 110 may replace, based on the data 4 sent by the network device 120, the network device 120 to continue providing a communication service.

It should be understood that a specific manner of sending the data 4 by the network device 120 to the network device 110 may be using private information, or may be forwarding by the foregoing core network element (where a new core network element may be configured, or the existing core network element 130 may be used, which is not limited in this application), or using an existing standard interface with a limited application scope, or using a future standard interface. This is not limited in this application.

According to the foregoing technical solutions, this application can implement the redundancy backup function between network devices, and improve the reliability of the wireless communication system, to further ensure service reliability.

During implementation of functions such as network device coordination or redundancy backup, in the foregoing manner of the data transmission between network devices, this application supports implementation of data exchange between network devices, so that a peer network device can determine a status of a local network device, and use the status as a basis of determining whether network device coordination or a switching operation needs to be performed.

In a possible implementation, this application further supports the network device 110 in sending a plurality of pieces of data to the network device 120 via the core network element 130. Correspondingly, the network device 120 may also send a plurality of pieces of data to the network device 110 via the core network element 130. For a specific procedure, refer to the foregoing descriptions.

In a possible implementation, this application further supports the network device 110 in sending a plurality of pieces of backup data to the network device 120. Correspondingly, the network device 120 may also send a plurality of pieces of backup data to the network device 110.

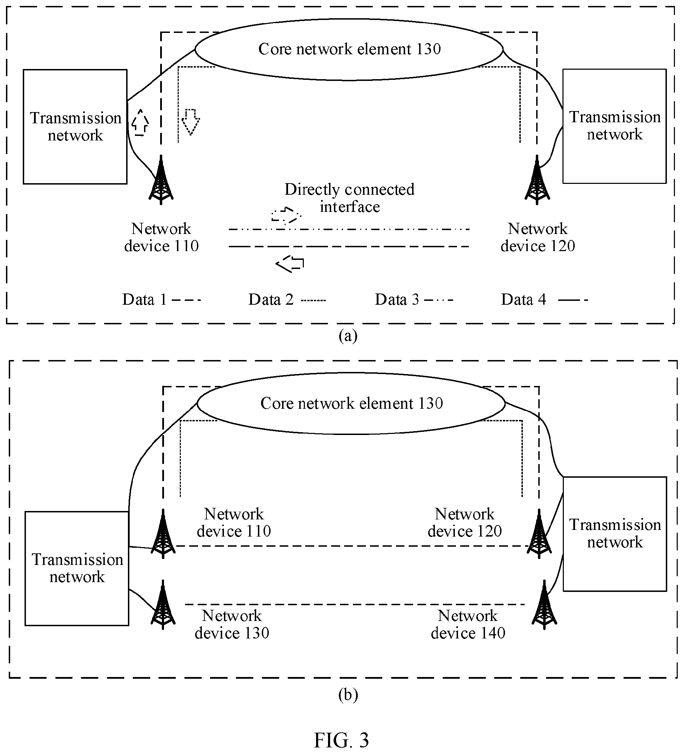

FIG. 3 is a diagram of data transmission between network devices according to an embodiment of this application. As shown in (a) in FIG. 3, the network device 110 and the network device 120 transmit the data 1 and the data 2 via the core network element 130. Specifically, the network device 110 sends the data 1 to the network device 120 via the core network element 130, and the network device 120 sends the data 2 to the network device 110 via the core network element 130. For transmission directions of the data 1 and the data 2, refer to different types of dashed lines in FIG. 3. The network device 110 may also send the backup data (the data 3) of the data 1 to the network device 120 through a directly connected interface between the network device 110 and the network device 120. The network device 120 may also send the backup data (the data 4) of the data 2 to the network device 110 through the directly connected interface between the network device 110 and the network device 120. In this way, this application supports the implementation of the redundancy backup function between network devices, and can improve the reliability of the wireless communication system, to ensure reliability of service transmission. As shown in (b) in FIG. 3, data transmission between a plurality of network devices may be performed via the core network element 130. For example, the data transmission between the network device 110 and the network device 120 is performed via the core network element 130, and data transmission between a network device 130 and a network device 140 is performed via the core network element 130. In addition, for a manner of performing data transmission between the network device 130 and the network device 140 via the core network element 130, refer to the manner of performing data transmission between the network device 110 and the network device 120 via the core network element 130. Details are not described herein again.

In FIG. 3, a network device and a core network element may be connected via a transmission network (as shown in FIG. 3) (or may be connected in another manner). Network devices may also be connected via a transmission network (not shown in FIG. 3). The transmission network is a network used as a transmission channel. A specific form of the transmission network is not limited in this application. For example, the transmission network includes at least one of the following: an optical cable, an optical fiber, a copper wire, a signal amplifier, an interface, a connector, an interface converter, a microwave system, a satellite, and the like.

In addition, the directly connected interface between the network device 110 and the network device 120 is not limited to be implemented in a wireless transmission manner or a limited transmission manner in this application.

It should be noted that, in this embodiment of this application, when a communication architecture includes one core network element and a plurality of network devices, this application supports data transmission between any two network devices via the core network element, and also supports direct data transmission between any two network devices.

The foregoing describes the method embodiment in embodiments of this application, and the following describes corresponding apparatus embodiments.

To implement the functions in the method provided in embodiments of this application, both the terminal and the network device may include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

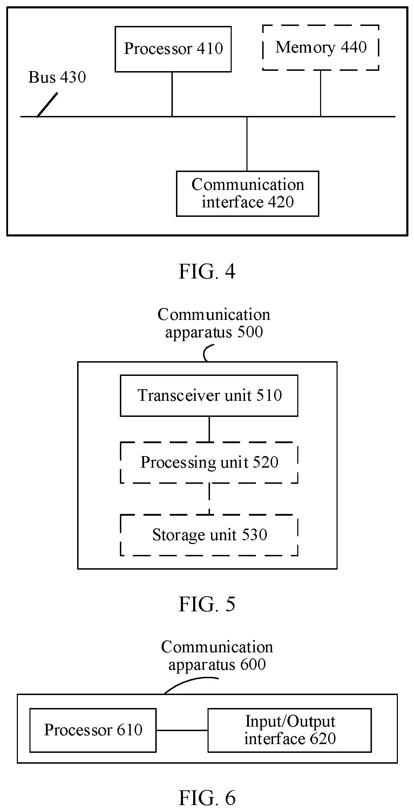

FIG. 4 is a block diagram of a communication apparatus 400 according to an embodiment of this application. The communication apparatus 400 includes a processor 410 and a communication interface 420. The processor 410 and the communication interface 420 may be connected to each other via a bus 430. The communication apparatus 400 may be configured to implement a function of a network device 110, may be configured to implement a function of a network device 120, or may be configured to implement a function of a core network element 130.

Optionally, the communication apparatus 400 further includes a memory 440.

The memory 440 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory is any other medium that can carry or store expected program code in a form of an instruction or a data structure and that can be accessed by a computer, but is not limited thereto. For example, the memory 440 is configured to store related instructions and data.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module. For example, the processor 410 may be one or more central processing units (central processing units, CPUs). When the processor 410 is one CPU, the CPU may be a single-core CPU or a multicore CPU.

When the communication apparatus 400 is configured to implement the function of the network device 110, for example, the processor 410 is configured to perform the following operations: determining data 1; and sending the data 1 to the core network element 130. For another example, the processor 410 may perform the following operation: receiving data 2 from the core network element 130. For another example, the processor 410 may perform the following operation: sending data 3 to the network device 120, where the data 3 is backup data of the data 1.

The foregoing content is merely used as an example for description. When the communication apparatus 400 is configured to implement the function of the network device 110, the communication apparatus 400 is responsible for performing the methods or steps related to the network device 110 in the foregoing method embodiment.

When the communication apparatus 400 is configured to implement the function of the network device 120, for example, the processor 410 is configured to perform the following operation: receiving the data 1 from the core network element 130. For another example, the processor 410 may perform the following operation: sending data 4 to the network device 110, where the data 4 is backup data of the data 2.

The foregoing content is merely used as an example for description. When the communication apparatus 400 is configured to implement the function of the network device 120, the communication apparatus 400 is responsible for performing the methods or steps related to the network device 120 in the foregoing method embodiment.

When the communication apparatus 400 is configured to implement the function of the core network element 130, for example, the processor 410 is configured to perform the following operations: receiving the data 1 from the network device 110; and sending the data 1 to the network device 120.

The foregoing content is merely used as an example for description. When the communication apparatus 400 is configured to implement the core network element 130, the communication apparatus 400 is responsible for performing the methods or steps related to the core network element 130 in the foregoing method embodiment.

The foregoing description is merely an example for description. For specific content, refer to the content shown in the foregoing method embodiment. In addition, for implementation of each operation in FIG. 4, refer to corresponding descriptions in the method embodiment shown in FIG. 2 and FIG. 3.

FIG. 5 is a block diagram of a communication apparatus 500 according to an embodiment of this application. The communication apparatus 500 may be the network device or the core network element in the foregoing embodiments, or may be a chip or a module in the network device or the core network element, and is configured to implement the method in the foregoing embodiments. The communication apparatus 500 includes a transceiver unit 510 and a processing unit 520. The following describes the transceiver unit 510 and the processing unit 520 by using examples.

The transceiver unit 510 may include a sending unit and a receiving unit that are respectively configured to implement a sending function or a receiving function in the foregoing method embodiment, and may further include a processing unit, configured to implement a function other than the sending function or the receiving function.

When the communication apparatus 500 is configured to implement a function of a network device 110, for example, the transceiver unit 510 is configured to send data 1 to a core network element 130. The processing unit 520 is configured to determine the data 1.

Optionally, the communication apparatus 500 further includes a storage unit 530, and the storage unit 530 is configured to store a program or code used to perform the foregoing method.

The foregoing content is merely used as an example for description. When the communication apparatus 500 is configured to implement the network device 110, the communication apparatus 500 is responsible for performing the methods or steps related to the network device 110 in the foregoing method embodiment.

The communication apparatus 500 is a network device 120. For example, the transceiver unit 510 is configured to receive the data 1 from the core network element 130.

Optionally, the communication apparatus 500 further includes a storage unit 530, configured to store a program or code used to perform the foregoing method.

The foregoing content is merely used as an example for description. When the communication apparatus 500 is configured to implement the network device 120, the communication apparatus 500 is responsible for performing the methods or steps related to the network device 120 in the foregoing method embodiment.

The communication apparatus 500 is configured to implement the core network element 130. For example, the transceiver unit 510 is configured to receive the data 1 from the network device 110, and is further configured to send the data 1 to the network device 120.

Optionally, the communication apparatus 500 further includes a storage unit 530, configured to store a program or code used to perform the foregoing method.

The foregoing content is merely used as an example for description. When the communication apparatus 500 is configured to implement the core network element 130, the communication apparatus 500 is responsible for performing the methods or steps related to the core network element 130 in the foregoing method embodiment.

In addition, for implementation of each operation in FIG. 5, refer to corresponding descriptions of the content shown in the foregoing method embodiment. Details are not described herein again.

The communication apparatuses shown in FIG. 4 and FIG. 5 are configured to implement the content described in the foregoing method embodiment. Therefore, for specific execution steps and methods of the communication apparatuses shown in FIG. 4 and FIG. 5, refer to the content described in the foregoing method embodiment.

It should be understood that the transceiver unit may include the sending unit and the receiving unit. The sending unit is configured to perform a sending action of the communication apparatus, and the receiving unit is configured to perform a receiving action of the communication apparatus. For ease of description, in embodiments of this application, the sending unit and the receiving unit are combined into one transceiver unit. Unified descriptions are provided herein, and details are not described below.

FIG. 6 is a diagram of a communication apparatus 600 according to an embodiment of this application. The communication apparatus 600 may be configured to implement a function of the network device 110, the network device 120, or the core network element 130 in the foregoing method. The communication apparatus 600 may be a chip in the network device 110, the network device 120, or the core network element 130. The communication apparatus 600 includes an input/output interface 620 and a processor 610. The input/output interface 620 may be an input/output circuit. The processor 610 may be a signal processor, a chip, or another integrated circuit that can implement the method in this application. The input/output interface 620 is configured to input or output a signal or data.

For example, the communication apparatus 600 is the network device 110, and the input/output interface 620 is configured to send data 1 to the core network element 130. The processor 610 is configured to determine the data 1. The processor 610 is further configured to perform some or all steps of any method provided in this application.

For example, the communication apparatus 600 is the network device 120, and the input/output interface 620 is configured to receive the data 1 from the core network element 130. The processor 610 is configured to perform some or all steps of any method provided in this application.

In a possible implementation, the processor 610 executes instructions stored in a memory, to implement a function implemented by the network device 110 or the terminal device 120.

Optionally, the communication apparatus 600 further includes the memory. Optionally, the processor and the memory are integrated together. Optionally, the memory is outside the communication apparatus 600.

In a possible implementation, the processor 610 may be a logic circuit, and the processor 610 inputs/outputs a message or signaling through the input/output interface 620. The logic circuit may be a signal processor, a chip, or another integrated circuit that can implement the method in embodiments of this application.

The foregoing descriptions of the communication apparatus 600 in FIG. 6 are merely an example for description. The communication apparatus 600 may be configured to perform the method in the foregoing embodiments. For specific content, refer to the descriptions of the foregoing method embodiment. Details are not described herein again.

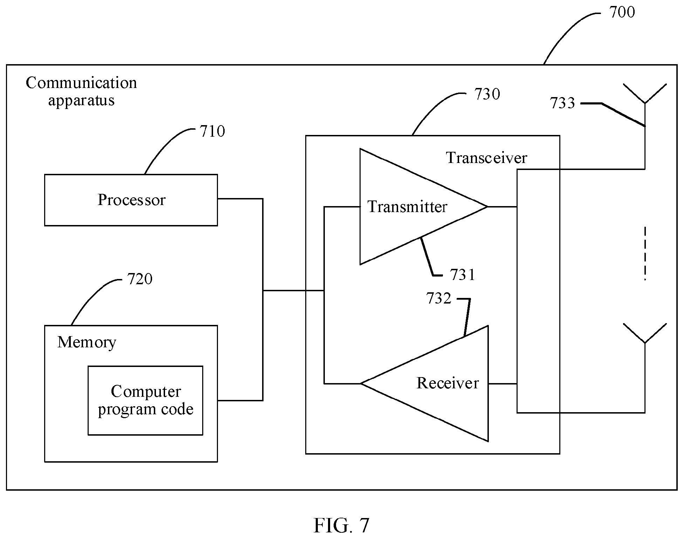

FIG. 7 is a block diagram of a communication apparatus 700 according to an embodiment of this application. The communication apparatus 700 may be a network device or a chip. The communication apparatus 700 may be configured to perform the operation performed by the network device in the foregoing method embodiment.

When the communication apparatus 700 is the network device, for example, a base station, FIG. 7 is a simplified diagram of a structure of the base station. The base station includes a part 710, a part 720, and a part 730. The part 710 is mainly configured to perform baseband processing, control the base station, and the like. The part 710 is usually a control center of the base station, may be usually referred to as a processor, and is configured to control the base station to perform a processing operation of a network device side in the foregoing method embodiment. The part 720 is mainly configured to store computer program code and data. The part 730 is mainly configured to receive and send a radio frequency signal, and perform conversion between a radio frequency signal and a baseband signal. The part 730 may be usually referred to as a transceiver module, a transceiver machine, a transceiver circuit, a transceiver, or the like. The transceiver module in the part 730 may also be referred to as a transceiver machine, a transceiver, or the like, and includes an antenna 733 and a radio frequency circuit (not shown in the figure). The radio frequency circuit is mainly configured to perform radio frequency processing. Optionally, in the part 730, a component configured to implement a receiving function may be considered as a receiver, and a component configured to implement a sending function may be considered as a transmitter. In other words, the part 730 includes a receiver 732 and a transmitter 731. The receiver may also be referred to as a receiving module, a receiver machine, a receiver circuit, or the like, and the transmitter may be referred to as a transmitting module, a transmitter machine, a transmitter circuit, or the like.

The part 710 and the part 720 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may alternatively share one or more processors, or a plurality of boards share one or more memories, or a plurality of boards share one or more processors simultaneously.

In an implementation, the transceiver module in the part 730 is configured to perform a receiving and sending-related process performed by the network device in the embodiment shown in FIG. 2 and FIG. 3. The processor in the part 710 is configured to perform a processing-related process performed by the network device in the embodiment shown in FIG. 2 and FIG. 3.

In another implementation, the processor in the part 710 is configured to perform a processing-related process performed by a communication device in the embodiment shown in FIG. 2 and FIG. 3.

In another implementation, the transceiver module in the part 730 is configured to perform a receiving and sending-related process performed by a communication device in the embodiment shown in FIG. 2 and FIG. 3.

It should be understood that FIG. 7 is merely an example rather than a limitation. The network device including the processor, the memory, and the transceiver may not depend on the structures shown in FIG. 4 to FIG. 6.

When the communication apparatus 700 is the chip, the chip includes a transceiver, a memory, and a processor. The transceiver may be an input/output circuit or a communication interface. The processor is a processor, a microprocessor, or an integrated circuit integrated on the chip. The sending operation of the network device in the foregoing method embodiment may be understood as an output of the chip, and the receiving operation of the network device in the foregoing method embodiment may be understood as an input of a chip.

This application further provides a chip, including a processor. The processor is configured to invoke, from a memory, instructions stored in the memory and run the instructions, to enable a communication device on which the chip is installed to perform the method in the foregoing examples.

This application further provides another chip, including an input interface, an output interface, and a processor. The input interface, the output interface, and the processor are connected through an internal connection path. The processor is configured to execute code in a memory. When the code is executed, the processor is configured to perform the method in the foregoing examples. Optionally, the chip further includes the memory. The memory is configured to store a computer program or code.

This application further provides a processor, configured to be coupled to a memory, and configured to perform a method and a function that are related to the network device or the terminal device in any one of the foregoing embodiments.

Another embodiment of this application provides a computer program product including instructions. When the computer program product runs on a computer, the method in the foregoing embodiments is implemented.

This application further provides a computer program. When the computer program is run on a computer, the method in the foregoing embodiments is implemented.

Another embodiment of this application provides a computer-readable storage medium. The computer-readable storage medium stores a computer program. When the computer program is executed by a computer, the method in the foregoing embodiments is implemented.

This application further provides a communication system. The communication system includes a network device 110, a network device 120, and a core network element. The network device 110 is configured to perform the foregoing method, the network device 120 is configured to perform the foregoing method, and the core network element 130 is configured to perform the foregoing method. For a specific description, refer to the foregoing descriptions. Details are not described herein again.

In the descriptions in embodiments of this application, unless otherwise specified, "a plurality of" means two or more than two. "At least one of the following items (pieces)" or a similar expression thereof indicates any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, words such as "example" or "for example" are used to represent an example or a description.

In the descriptions of embodiments of this application, "/" represents an "or" relationship between associated objects unless otherwise specified. For example, A/B may represent A or B. In this application, "and/or" describes only an association relationship between associated objects, and represents that three relationships may exist. For example, A and/or B may represent the following three cases: A exists alone, both A and B exist, and B exists alone, where A and B may be singular or plural.

Sequence numbers of the foregoing processes do not mean execution sequences in embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some characteristics may be ignored or not performed.

In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When functions are implemented in the form of a software functional unit and sold or used as an independent product, the functions may be stored in a computer-readable storage medium. Based on such an understanding, the technical solutions of embodiments of this application essentially, or the part contributing to a conventional technology, or some of the technical solutions may be implemented in a form of a software product. The computer software product is stored in a storage medium, and includes several instructions for instructing a computer device (which may be a personal computer, a server, or a network device) to perform all or some of the steps of the method described in embodiments of this application. The foregoing storage medium includes any medium that can store program code, such as a USB flash drive, a removable hard disk, a ROM, a RAM, a magnetic disk, or an optical disc.

Mutual reference may be made to content in embodiments of this application. Unless otherwise stated or there is a logic conflict, terms and/or descriptions in different embodiments are consistent and may be mutually referenced, and technical characteristics in different embodiments may be combined based on an internal logical relationship thereof, to form a new embodiment.

It may be understood that, in embodiments of this application, the terminal device, the access network device, or a core network device may perform some or all of the steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be necessarily to be performed.

## Claims

1. A data transmission method, wherein the method is applied to a side of a first network device, and the method comprises:
determining first data, wherein a target receiving object of the first data is a second network device; and
sending the first data to a core network element, wherein the core network element is configured to forward the first data to the second network device.

2. The method according to claim 1, wherein the method further comprises:
receiving second data from the core network element, wherein the second data is sent by the second network device to the core network element.

3. The method according to claim 1 or 2, wherein the first data indicates at least one of first configuration information of the first network device and second configuration information of the second network device.

4. The method according to claim 2 or 3, wherein the second data indicates at least one of third configuration information of the first network device and fourth configuration information of the second network device.

5. The method according to any one of claims 1 to 4, wherein the method further comprises:
sending, by the first network device, third data to the second network device, wherein the third data is backup data of the first data.

6. The method according to claim 5, wherein the third data is sent by the first network device through a directly connected interface between the first network device and the second network device.

7. The method according to any one of claims 1 to 6, wherein the method further comprises:
receiving, by the first network device, fourth data from the second network device, wherein the fourth data is backup data of the second data.

8. The method according to claim 7, wherein the fourth data is received by the first network device through the directly connected interface between the first network device and the second network device.

9. A data transmission method, wherein the method is applied to a side of a core network element, and the method comprises:
receiving first data from a first network device, wherein a target receiving object of the first data is a second network device; and
sending the first data to the second network device.

10. The method according to claim 9, wherein the method further comprises:
receiving second data from the second network device, wherein a target receiving object of the second data is the first network device; and
sending the second data to the first network device.

11. The method according to claim 9 or 10, wherein the first data indicates at least one of first configuration information of the first network device and second configuration information of the second network device.

12. The method according to claim 10 or 11, wherein the second data indicates at least one of third configuration information of the first network device and fourth configuration information of the second network device.

13. A data transmission method, wherein the method is applied to a side of a second network device, and the method comprises:
receiving first data from a core network element, wherein a source sending device of the first data is a first network device, and the core network element is configured to forward the first data to the second network device.

14. The method according to claim 13, wherein the first data indicates at least one of first configuration information of the first network device and second configuration information of the second network device.

15. A communication apparatus, comprising a unit configured to implement the method according to any one of claims 1 to 14.

16. A communication system, comprising:
a first network device, a second network device, and a core network element, wherein
the first network device is configured to send first data to the core network element; and
the core network element is configured to send the first data to the second network device.

17. The system according to claim 16, wherein
the second network device is configured to send second data to the core network element; and
the core network element is further configured to send the second data to the first network device.

18. The system according to claim 16 or 17, wherein the first data indicates at least one of first configuration information of the first network device and second configuration information of the second network device.

19. The system according to claim 17 or 18, wherein the second data indicates at least one of third configuration information of the first network device and fourth configuration information of the second network device.

20. The system according to any one of claims 16 to 19, wherein the first network device is further configured to send third data to the second network device, wherein the third data is backup data of the first data.

21. The system according to claim 20, wherein the third data is sent by the first network device through a directly connected interface between the first network device and the second network device.

22. The system according to any one of claims 16 to 21, wherein the first network device is further configured to receive fourth data from the second network device, wherein the fourth data is backup data of the second data.

23. The system according to claim 22, wherein the fourth data is received by the first network device through the directly connected interface between the first network device and the second network device.

24. A communication apparatus, comprising a processor, wherein the processor is configured to enable, by executing a computer program or instructions or by using a logic circuit, the communication apparatus to perform the method according to any one of claims 1 to 14.

25. The communication apparatus according to claim 24, wherein the communication apparatus further comprises a memory, and the memory is configured to store the computer program or the instructions.

26. The communication apparatus according to claim 24 or 25, wherein the communication apparatus further comprises a communication interface, and the communication interface is configured to input and/or output a signal.

27. A communication apparatus, comprising a logic circuit and an input/output interface, wherein the input/output interface is configured to input and/or output a signal, and the logic circuit is configured to perform the method according to any one of claims 1 to 14.

28. A computer-readable storage medium, wherein the computer-readable storage medium stores a computer program or instructions; and when the computer program or the instructions are run on a computer, the method according to any one of claims 1 to 14 is performed.

29. A computer program product, comprising instructions, wherein when the instructions are run on a computer, the method according to any one of claims 1 to 14 is performed.
